## Europäisches Patentamt

## European Patent Office

## Office européen des brevets

(11) Publication number: **0 084 761**
**A1**

(12) **EUROPEAN PATENT APPLICATION**

(21) Application number: **82830017.8**

(22) Date of filing: **27.01.82**

(51) Int. Cl.³: **H 02 K 53/00**

(43) Date of publication of application: **03.08.83**
**Bulletin 83/31**

(84) Designated Contracting States: **AT BE CH DE FR GB IT LI LU NL SE**

(71) Applicant: **Mularoni, Luciano, Via G. Giacomini, 356, Repubblica di S. Marino (IT)**

(72) Inventor: **Mularoni, Luciano, Via G. Giacomini, 356, Repubblica di S. Marino (IT)**

(74) Representative: **Sassatelli, Franco, c/o INIP Ufficio Internazionale Brevetti per Deposito di Brevetti e Marchi via Mazzini, 170, I-40139 Bologna (IT)**

(54) **Mechanical generator of electrical energy for universal employ.**

(57) By drawing current from an accumulator, the initial starting of an electrical motor is obtained, with take-off effect; and through a transmission a fly wheel with shaft fitted on bearings is driven; the said shaft is connected to the one of a current generator. The prevalence mechanical ratio of the fly wheel weight, which after starting is expressed in impulsion force to prosecute the rotation in respect to the impulse force foreseen for the generator drive, enables the prosecution with effect continuity. The cycle that performs the production of potentiated energy foresses the drawing of energy on line to send to the user, while another line will recharge the accumulator.

EP 0 084 761 A1

- 1 -

Mechanical generator of electrical energy for employ universality.

The invention refers to a mechanical generator of electrical energy, to drive by means of the initial current drawn from an accumulator or another source, which is then reintegrated, while the feeding current arrives on the line to the user.

The system allows universality of employ, in particular for the industry of motor vehicles, of the machine tools and operating machines. The system foresees the initial drawing of current from an accumulator to start an electrical motor with take-off effect. By means of a pulley, this one drives a fly wheel with a particular weight, the shaft of which, fitted on bearings, is coaxially connected to the one of a current generator.

The trials have demostrated that, in the motion prosecution, the impul se force trasmitted by the fly wheel is directly proportional to its weight, which condition permits to foresee the fly wheel conformation to employ in relation to acceptable values of prevalence on the retention effect expressed by the generator on which the wheel shaft is engaged.

In this way, the cycle permits the potentiated energy delivery by means of the current sent on the line to the user, while another line will restore the current to the accumulator.

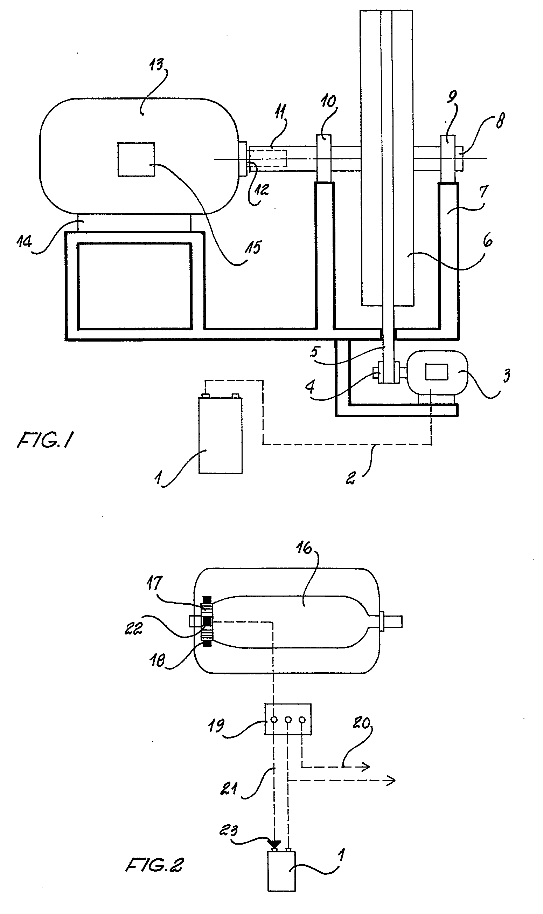

A scheme of execution is illustrated on the drawings of Table 1 where fig. 1 is the general view of the mechanical generating device of ener gy, showing the dashed line of delivery from a battery to an electrical motor fitted in a corresponding position to the fly wheel. By means of pulley and transmission belt, the said motor drives the wheel supported on bearings fitted on a fork. The rotation shaft of the fly wheel can be noted too coaxially engaged with the shaft of a dynamo on the base. Fig. 2 is the schematic view of the system of electrical lines for the current drawing separately connected to the user and the battery. The version shown in a merely indicative way and consequently not limiting of the proceeding, foresees battery 1 by means of delivery line 2, the motor feeding 3, which supporting pulley 4 by means of belt 5 rotates fly wheel 6 fitted on fork 7 by means of shaft 8 engaged in the bearing couple 9 and 10. Shaft 8 though coaxial engagement 11 rotates shaft 12 of the current generator 13 stabilized on pedestal 14. The current thus delivered reaches the user 15. The delivery phase foresees the rotation of rotor 16 holding a collector 17 on its end with brushes 18, delivering current to terminal board 19, while bringing current to the user on line 20; on line 21, it feeds, with continuous cycle by brushes 22, battery 1 which has a terminal diode 23 to prevent the inverted passage of the current. If the generator of dynamo type 13 is foreseen with alternate current, an A. C. tension is obtained at the outlet which requires the continuous battery recharge to prevent the current return on line 20.

As theorisation of the system according to the invention, it can be said that the fly wheel rotation performs an interference of rupture in the lines of magnetic force proper of the dynamo. Through the contacts on the brushes, a magnetic field of a new kind is obtained, from the repture of linearity of which a net tension results.

In practice, the form and type of the components, the operation scheme, the materials that can be used, as well as the use forms can be differentlu foreseen.

Claims.                    — 1 —

1) Mechanical generator of electrical energy for employ universality, characterized by the fact that the system foresees the initial drawing of current from an accumulator to start an electrical motor with take-off effect. By means of a pulley, this one drives a fly wheel with a particular weight, the shaft of which, fitted on bearings, is coaxially connected to the one of a current generator. The trials have demostrated that, in the motion prosecution, the impulse force transmitted by the fly wheel is directly proportional to its weight, which condition permits to foresee the fly wheel conformation to employ in relation to acceptable values of prevalence on the retention effect expressed by the generator on xhich the wheel shaft is engaged. In this way, the cycle permits the potentiated energy delivery by means of the current sent on the line to the user, while another line will restore the current to the accumulator.

2) Mechanical generator of electrical energy for employ universality, according to the previous claim, characterized by the fact that it foresees battery 1 by means of delivery line 2, the motor feeding 3, which supporting pulley 4 by means of belt 5 rotates fly wheel 6 fitted on fork 7 by means of shaft 8 engaged in the bearing couple 9 and 10. Shaft 8 though coaxial engagement 11 rotates shaft 12 of the current generator 13 stabilized on pedestal 14. The current thus delivered reaches the user 15.

3) Mechanical generator of electrical energy for employ universality, according to the previous claims, characterized by the fact that the delivery phase foresees the rotation of rotor 16 holding a collector 17 on its end with brushes 18, delivering current to terminal board 19, while bringing current to the user on line 20; on line 21, it feeds, with continuous cycle by brushes 22, battery 1 which has a terminal diode 23 to prevent the inverted passage of the current.

0084761

4) Mechanical generator of electrical energy for employ universality, according to the previous claims, characterized by the fact that if the generator of dynamo type 13 is foreseen with alternate current, an A. C. tension is obtained at the outlet which requires the continuous battery recharge to prevent the current return on line 20.

1/1    0084761

FIG.1

FIG.2

0084761

**EUROPEAN SEARCH REPORT**

Application number

EP 82 83 0017

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | PATENTS ABSTRACTS OF JAPAN, vol. 5, no. 91(E-61)(763), 13th June 1981 & JP - A - 56 35676 (MITSUAKI INAGAKI) 08-04-1981 * Whole document * | 1-4 | H 02 K 53/00 |
| A | DE-C- 931 791 (RIEGER) * Page 2, lines 72-76, 98-101 * | 1,3,4 | |
| A | US-A-2 371 011 (WOMBLE) | | |

TECHNICAL FIELDS SEARCHED (Int. Cl. ³)

H 02 K

The present search report has been drawn up for all claims

| Place of search | Date of completion of the search | Examiner |
|---|---|---|
| THE HAGUE | 12-11-1982 | STEINMETZ L.J.P. |